Europäisches Patentamt

European Patent Office

Office européen des brevets

(11) Numéro de publication: **0 207 834**
**B1**

(12) # FASCICULE DE BREVET EUROPEEN

(45) Date de publication du fascicule du brevet:
01.03.89

(51) Int. Cl.⁴: **B 01 J 27/10, C 08 F 4/02**

(21) Numéro de dépôt: **86401219.0**

(22) Date de dépôt: **05.06.86**

(54) Support à base de silice et de chlorure de magnésium, son procédé de fabrication, catalyseurs obtenus à partir de ce support.

(30) Priorité: **14.06.85 FR 8509090**

(43) Date de publication de la demande:
**07.01.87 Bulletin 87/2**

(45) Mention de la délivrance du brevet:
**01.03.89 Bulletin 89/9**

(84) Etats contractants désignés:
**AT BE DE FR GB IT NL SE**

(56) Documents cités:
**FR-A- 2 080 970**
**FR-A- 2 125 748**
**US-A- 3 079 445**

(73) Titulaire: **ATOCHEM, 4 & 8, Cours Michelet La Défense 10, F-92800 Puteaux (FR)**

(72) Inventeur: **Pasquet, Véronique, 120, Rue Mazenod, F-69003 Lyon (FR)**
Inventeur: **Spitz, Roger, 44, Rue des Fleurs, F-69360 Serezin du Rhone (FR)**

(74) Mandataire: **Foiret, Claude et al, ATOCHEM Département Propriété Industrielle, F-92091 Paris la Défense 10 Cédex 42 (FR)**

## Description

La présente invention concerne un procédé de fabrication de support de catalyseur à base de silice pratiquement déshydroxylée et de chlorure de magnésium anhydre. Elle concerne également les catalyseurs de polymérisation et copolymérisation des alpha-oléfines obtenus à partir de ce support.

Il est connu d'utiliser la silice comme support catalytique, et en particulier comme support de catalyseur de polymérisation et copolymérisation des alpha-oléfines. Ces catalyseurs sont en général constitués d'un produit actif à base de chlorure de magnésium, d'un halogénure d'un métal de transition des groupes IV, V et VI de la Classification Périodique des éléments, de préférence le titane, éventuellement d'un donneur d'électrons et/ou d'un composé organo-métallique d'un métal du groupe III de la Classification Périodique des éléments, de préférence l'aluminium.

Avant son utilisation comme support catalytique, la silice est habituellement deshydroxylée par un traitement thermique à haute température en général supérieure à 600°C. Dans ce cas la structure de la silice peut être transformée et ses propriétés comme support catalytique devenir très médiocres. De toute façon il reste un taux d'hydroxyle très supérieur à 100 micromoles par gramme de silice aux températures où la texture poreuse s'effondre. C'est pourquoi sont pratiquement conservées, pour cette application, les fonctions hydroxyles de la silice. Toutefois, ces fonctions hydroxyles peuvent nuire à l'activité du catalyseur supporté. C'est par exemple le cas avec le TiCl$_4$, qui est susceptible de réagir avec les groupements hydroxyles de la silice pour donner des liaisons de type Si-O-TiCl$_3$, Si-O-TiCl$_2$, le titane sous cette forme devenant peu actif en polymérisation.

Selon l'invention, dans la mesure où le catalyseur doit contenir du chlorure de magnésium, il est possible d'obtenir un support à base de silice et de chlorure de magnésium contenant moins de 100 micromoles de fonction hydroxylique par gramme de support, tout en conservant à la silice ses propriétés de support catalytique. Ce support de catalyseur peut être constitué d'un rapport poids

$$\frac{SiO_2}{MgCl_2}$$

compris entre 1 et 20.

Le procédé de fabrication consiste à associer du chlorure de magnésium à la silice et à traiter l'ensemble à une température inférieure à 720°C en présence d'un agent de deshydratation suffisamment volatil pour ne laisser aucun dépôt sur le support après le traitement. Les agents de deshydratation particulièrement recommandés sont les composés chlorés volatils tels l'acide chlorhydrique et ses sels susceptibles de libérer par chauffage de l'acide chlorhydrique et de s'éliminer sans laisser de résidu gênant sur le support de catalyseur; le chlorure d'ammonium est particulièrement recommandé dans ce cas contrairement à ce qu'on aurait pu penser d'après PERI. J.B., J. PHys. Chem. 70 p. 2937 (1966), qui montre l'existence de résidus azotés sur la silice lors de son contact avec l'acide chlorhydrique et l'ammoniaque.

L'association du chlorure de magnésium à la silice peut se faire selon tous les moyens connus, les plus simples consistant à mélanger les produits à sec ou encore à imprégner une quantité donnée de silice en dispersion dans une solution aqueuse, de préférence saturée, de chlorure de magnésium. Tout en étant parmi les plus simples, le procédé par imprégnation semble être également un des plus efficaces pour répartir de façon homogène le chlorure de magnésium sur la silice.

L'agent de deshydratation est introduit à tout moment de l'association de la silice et du chlorure de magnésium. De façon pratique on l'ajoute à l'association, préalablement au traitement thermique à une température inférieure à 720°C. La quantité précise d'agent de deshydratation importe peu, il suffit qu'elle soit suffisante pour éliminer le maximum de fonction hydroxyle, tout en évitant un excès inutile n'apportant aucun avantage. Une proportion en poids d'environ 20 pour cent d'agent de deshydratation par rapport à la silice est convenable.

Finalement on récupère un support de catalyseur qui grâce à la synergie entre le chlorure de magnésium et l'agent de deshydratation ne possède qu'une teneur minimum en fonction hydroxyle.

Ce support est particulièrement adapté pour la fabrication de catalyseurs de polymérisation et de copolymérisation des alphaoléfines y compris de l'éthylène.

Cette fabrication de catalyseurs peut s'effectuer par tous moyens connus consistant à déposer sur la surface du support au minimum un produit actif qui est un composé choisi habituellement parmi les halogénures d'un métal de transition des groupes IV, V et VI de la Classification Périodique des éléments, le plus courant étant un chlorure de titane.

Il peut également être recommandé d'associer sur le support au produit actif un donneur d'électrons choisi par exemple dans le groupe constitué par les acides carboxyliques aliphatiques, les acides carboxyliques aromatiques, les esters d'alcoyle des acides carboxyliques aliphatiques, les esters d'alcoyle des acides carboxyliques aromatiques, les éthers aliphatiques, les éthers cycliques, les cétones aliphatiques, les cétones aromatiques, les aldéhydes aliphatiques, les alcools aliphatiques, les alcools aromatiques, les halogénures d'acides aliphatiques, les nitriles aliphatiques, les nitriles aromatiques, les amines aliphatiques, les amines aromatiques, les phosphines aliphatiques et les phosphines aromatiques, que ces composés soient mono ou polyfonctionnels.

Le donneur d'électrons est imprégné au support à n'importe quelle étape de fabrication du catalyseur. Il peut être incorporé au support en mélange avec le produit actif, ou encore il peut être imprégné au support préalablement ou postérieurement au traitement du support par le produit actif.

Le catalyseur ainsi préparé est utilisable dans tout mode de polymérisation ou de copolymérisation de l'éthylène ou des alpha-oléfines, en particulier dans la polymérisation en suspension ou en phase gazeuse.

Les exemples suivants illustrent l'invention sans la limiter.

*Exemple 1*

*1.1. Préparation du support*

On imprègne sous agitation 10 g de silice (Grace 1952) de 4,5 millilitres de solution aqueuse saturée de MgCl$_2$. On élimine une partie de l'eau introduite dans ce support sous vide à une température d'environ 100°C, puis on le mélange à 2 g de NH$_4$Cl cristallisé. Le mélange est chauffé lentement à 550°C sous argon; cette température est maintenue pendant environ 30 minutes pour achever le traitement thermique du support.

A titre comparatif on fait subir le même traitement thermique à:

— la silice seule
— la silice seulement associée au chlorure d'ammonium dans les mêmes conditions que dans l'essai
— la silice associée au chlorure de magnésium dans les mêmes conditions que dans l'essai.

Les quantités de groupements hydroxyles mesurées sur les quatre supports sont les suivantes

| SUPPORT | Groupements OH en micromoles par gramme de support | Teneur en azote |
|---|---|---|
| Silice seule | 510 | — |
| Sulice + chlorure d'ammonium | 400 | non dosable |
| Silice + chlorure de magnésium | 400 | — |
| Silice + chlorure d'ammonium + chlorure de magnésium | 78 | non dosable |

De ces résultats d'essais il ressort qu'il existe une synergie entre le chlorure d'ammonium et le chlorure de magnésium facilitant la deshydratation de la silice.

*1.2. Préparation du catalyseur*

3 à 4 g de support, placés en tube de Schlenck, sont imprégnés d'heptane préalablement à un ajout de 2 ml de TiCl$_4$. Le mélange est agité, sous argon, à 65°C pendant 2 h 30. L'heptane et le TiCl$_4$ non fixé sont éliminés sous un vide d'environ 10$^{-5}$ mbar.

*1.3. Essais de polymérisation*

*1.3.1. Polymérisation de l'éthylène*

Dans un réacteur de 1500 ml sous atmosphère d'argon, on introduit 450 micromoles, comptées en aluminium, d'isoprénylaluminium et 18 mg du catalyseur précédent à 3% de Ti.

Le réacteur dans lequel est introduit de l'éthylène et de l'hydrogène est porté à 95°C, la pression partielle d'hydrogène étant de 2 bars. La pression totale est maintenue à 16 bars par un apport continu d'éthylène.

Après 4 heures de réaction, on décomprime le réacteur. On obtient 70 g de polyéthylène sous forme de poudre sèche dont les caractéristiques sont le suivantes:

| | |
|---|---|
| densité: | 0,963 |
| grade à 5 kg: | 0,92 |
| grade à 21,6 kg: | 11,18 |
| masse volumique apparente (MVA): | 0,32 g/cm$^3$ |
| productivité rapportée au titane: | 130 000 g/g de titane |

*1.3.2. Copolymérisation éthylène-butène*

Dans les conditions de polymérisation de l'éthylène, la masse de catalyseur n'étant seulement que de 23 mg et la pression d'hydrogène de 1 bar, on alimente le réacteur par un mélange éthylène-butène à 4,2% molaire de butène.

On obtient après 4 heures de réaction, 280 g de polyéthylène linéaire dont les caractéristiques sont les suivantes:

| | |
|---|---|
| densité: | 0,919 |
| grade à 2,16 kg: | 1,37 |
| grade à 21,6 kg: | 44,04 |
| MFR (Melt Flow Ratio): | 32,15 |
| MVA: | 0,415 g/cm$^3$ |
| productivité rapportée au titane: | 405 800 g/g de titane |

*1.3.3. Copolymérisation éthylène-butène (comparatif)*

Le catalyseur est préparé dans les conditions de l'exemple 1.2 à partir d'un support SiO$_2$ + MgCl$_2$ traité thermiquement en absence de NH$_4$Cl.

On reprend les conditions de polymérisation de l'éthylène (1.3.1.), la masse de catalyseur à 3,9% Ti étant de 20 mg et la pression d'hydrogène de 1 bar. On alimente le réacteur par un mélange éthylène-butène à 3,5% molaire de butène.

On obtient après 4 heures de réaction, 65 g de polyèthylène linéaire dont les caractéristiques sont les suivantes:

| | |
|---|---|
| densité: | 0,924 |
| grade à 2,16 kg: | 0,76 |
| grade à 21,6 kg: | 24,94 |
| MFR: | 32,8 |
| MVA: | 0,393 g/cm$^3$ |
| productivité rapportée au titane: | 83 300 g/g de titane |

## Exemple 2

### 2.1 Préparation du support

Le support est préparé dans les conditions de l'exemple 1.1. La quantité de solution saturée de $MgCl_2$ étant de 14 ml. La teneur en fonction hydroxyle de ce support est inférieure à 5 micromoles par gramme.

### 2.2. Préparation du catalyseur

Le catalyseur est préparé dans les conditions de l'exemple 1.2.

### 2.3. Copolymérisation éthylène-butène

Dans les conditions de l'exemple 1.3.2., la masse de catalyseur à 2,55% de titane utilisé étant de 17 mg et la pression d'hydrogène de 1 bar.

Le réacteur est alimenté par un mélange éthylène-butène à 4,05% molaire de butène.

On obtient après 4 heures de réaction 120 g de polyéthylène linéaire dont les caractéristiques sont les suivantes:

| | |
|---|---|
| densité: | 0,919 |
| grade à 2,16 kg: | 1,33 |
| grade à 21,6 kg: | 37,14 |
| MFR: | 28 |
| MVA | $0,403 \ g/cm^3$ |
| Productivité rapportée au titane: | 276 000 g/g de titane. |

## Exemple 3

### 3.1. Préparation du support

Le support est préparé dans les conditions de l'exemple 2.

### 3.2. Préparation du catalyseur

Le support est imprégné de benzoate d'éthyle dilué d'héptane, dans la proportion de 30% de benzoate d'éthyle par rapport au $MgCl_2$, pendant 1 heure à 40°C. Après élimination sous vide du liquide excédentaire, le support est imprégné de $TiCl_4$ dans les conditions de l'exemple 1.

### 3.3. Copolymérisation éthylène-butène

On reprend les conditions de l'exemple 1, la masse de catalyseur utilisé étant de 25 mg et la pression d'hydrogène de 1 bar.

Le réacteur est alimenté par un mélange éthylène-butène à 3,75% molaire de butène.

On obtient , après 4 heures de réaction, 215 g de copolymère dont les caractéristiques sont les suivantes:

| | |
|---|---|
| densité: | 0,921 |
| grade à 2,16 kg: | 1,63 |
| grade à 21,6 kg: | 45,64 |
| MFR: | 28 |
| MVA: | $0,410 \ g/cm^3$ |
| productivité rapportée au titane: | 215 000 g/g de titane |

## Revendications

1. Support de catalyseur à base de silice caractérisé en ce qu'il est constitué d'un mélange de silice et de chlorure de magnésium contenant moins de 100 micromoles de fonction hydroxyle par gramme de support.

2. Support selon la revendication 1 caractérisé en ce que le rapport en poids

$$\frac{SiO_2}{MgCl_2}$$

est compris entre 1 et 20.

3. Procédé de fabrication du support selon les revendications 1 et 2, caractérisé en ce qu'on associe du chlorure de magnésium à la silice et que l'on fait subir à l'ensemble un traitement thermique inférieur à 720°C en présence d'un agent de deshydratation.

4. Procédé selon la revendication 3, caractérisé en ce que l'agent de deshydratation est choisi parmi les composés chlorés volatils.

5. Procédé selon la revendication 4, caractérisé en ce que le composé chloré est choisi parmi l'acide chlorhydrique et ses sels susceptibles de libérer par chauffage de l'acide chlorhydrique.

6. Procédé selon la revendication 5, caractérisé en ce que le sel choisi est le chlorure d'ammonium.

7. Catalyseur de polymérisation ou de copolymérisation de l'éthylène ou des alpha-oléfines constitué au minimum d'un produit actif choisi parmi les halogénures d'un métal de transition des groupes IV, V et VI de la Classification Périodique des éléments et, éventuellement d'un donneur d'électrons déposés sur un support à base de silice caractérisé en ce que le support est préparé selon les revendications de 3 à 6.

## Patentansprüche

1. Katalysatorträger auf Basis von Siliciumdioxid, dadurch gekennzeichnet, daß er aus einem Gemisch von Siliciumdioxid und Magnesiumchlorid besteht und weniger als 100 Mikromol an Hydroxylfunktionen pro Gramm des Trägers enthält.

2. Träger nach Anspruch 1, dadurch gekennzeichnet, daß das Gewichtsverhältnis $SiO_2$ : $MgCl_2$ zwischen 1 und 20 liegt.

3. Verfahren zur Herstellung eines Trägers gemäß den Ansprüchen 1 und 2, dadurch gekennzeichnet, daß man Magnesiumchlorid auf das Siliciumdioxid aufbringt und dieses gemeinsam einer thermischen Behandlung bei weniger als 720°C in Gegenwart eines Dehydratisierungsagens unterzieht.

4. Verfahren nach Anspruch 3, dadurch gekennzeichnet, daß das Dehydratisierungsmittel unter den flüchtigen chlorierten Verbindungen ausgewählt wird.

5. Verfahren nach Anspruch 4, dadurch gekennzeichnet, daß die chlorierte Verbindung unter Chlorwasserstoffsäure und deren Salzen ausgewählt wird, die geeignet sind, beim Erhitzen Chlorwasserstoffsäure freizusetzen.

6. Verfahren nach Anspruch 5, dadurch gekennzeichnet, daß das ausgewählte Salz Ammoniumchlorid ist.

7. Katalysator für die Polymerisation oder Copolymerisation von Ethylen oder Alpha-Olefinen bestehend aus wenigstens einem aktiven Produkt ausgewählt aus den Halogeniden eines Übergangsmetalls der Gruppen IV, V und VI des Periodensystems der Elemente und gegebenenfalls einem Elektronendonor, der auf einem Träger auf Basis von Siliciumdioxid angeordnet ist, dadurch gekennzeichnet, daß der Träger gemäss den Ansprüchen 3 bis 6 hergestellt wird.

**Claims**

1. A catalyst support based on silica, characterized in that it consists of a mixture of silica and magnesium chloride containing less than 100 micromoles oh hydroxyl groups per gram of support.

2. A support according to Claim 1, characterized in that the ratio $SiO_2/MgCl_2$ is between 1 and 20 by weight.

3. A process for manufacturing a support according to Claims 1 and 2, characterized in that magnesium chloride is added to silica and the whole is subjected to a thermal treatment at less than 720°C in the presence of a dehydrating agent.

4. A process according to Claim 3, characterized in that the dehydrating agent is chosen from the volatile chlorinated compounds.

5. A process according to Claim 4, characterized in that the chlorinated compound is chosen from hydrochloric acid and its salts which can liberate hydrochloric acid on heating.

6. A process according to Claim 5, characterized in that the chosen salt is ammonium chloride.

7. A catalyst for the polymerization or depolymerization of ethylene or alpha-olefines comprising at least one active product chosen from the halides of transition metals of the groups IV, V and VI of the Periodic Classification of elements, and optionally with an electron donor, deposited on a support based on silica, characterized in that the support is produced according to Claim 3 to 6.